Europäisches Patentamt

European Patent Office

Office européen des brevets

(19)

(11) Veröffentlichungsnummer: **0 216 329 B1**

(12) **EUROPÄISCHE PATENTSCHRIFT**

(45) Veröffentlichungstag der Patentschrift: **02.01.92**

(21) Anmeldenummer: **86112962.5**

(22) Anmeldetag: **19.09.86**

(51) Int. Cl.⁵: **G11B 20/10**, G11B 5/09, H04L 7/04

(54) **Verfahren zur Übertragung eines Digitalsignals.**

(30) Priorität: **24.09.85 DE 3533962**

(43) Veröffentlichungstag der Anmeldung:
**01.04.87 Patentblatt 87/14**

(45) Bekanntmachung des Hinweises auf die
Patenterteilung:
**02.01.92 Patentblatt 92/01**

(84) Benannte Vertragsstaaten:
**AT BE CH DE FR GB IT LI LU NL SE**

(56) Entgegenhaltungen:
**EP-A- 0 044 713**
**US-A- 3 641 526**

**"R-DAT-Specification of Format, S.5 und 24, DAT-Konferenz vom 27.6.1985;**

(73) Patentinhaber: **Deutsche Thomson-Brandt GmbH**
**Hermann-Schwer-Strasse 3 Postfach 1307**
**W-7730 Villingen-Schwenningen(DE)**

(72) Erfinder: **Scholz, Werner, Dipl.-Ing.**
**Osterstrasse 20**
**W-3007 Gehrden(DE)**

(74) Vertreter: **Einsel, Robert, Dipl.-Ing.**
**Deutsche Thomson-Brandt GmbH Patent-**
**und Lizenzabteilung Göttinger Chaussee 76**
**W-3000 Hannover 91(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Bei der Aufzeichnung von Digitalsignalen in unterteilten Spuren, z.B. Aufzeichnung von digitalen Tonsignalen mit rotierenden Köpfen (R-DAT = Rotary head Digital Audio Tape), ist es bekannt, zu Beginn jeder Spur ein Signal für den Einlauf der PLL zur Regenerierung des Bittaktes (PLL-Run-In) aufzuzeichnen. Beim R-DAT-Signal enthält das Einlaufsignal lediglich die Information für die Frequenz und Phaseneinstellung der Taktregenerierungs-PLL. Die außerdem für die Verarbeitung des abgetasteten PCM-Signals erforderliche Wort- und Blocksynchronisierung erfolgt mit Hilfe von Synchronsignalen, die sich am Beginn jedes Datenblockes befinden. Der Aufbau eines derartigen R-DAT-Signals ist beschrieben in der "R-DAT-Specification of Format" der DAT-Konferenz vom 27.06.1985, insbesondere auf Seiten 5, 24. Beim R-DAT-Format wird als PLL-Run-In-Signal die Frequenz fch/2 verwendet, die jeweils für die Dauer von zwei Datenblöcken übertragen wird. fch ist die Bitrate des aufgezeichneten Signals (8-10 Code). Jeder Block besteht aus 360 bit bzw. 36 Wörtern zu 10 bit.

Das Blocksynchronsignal besteht aus einem 10-bit-Wort. Das Bitmuster der Synchr.-Worte lautet 0111100001 bzw. 1000011110. Es ist gewährleistet, daß diese Bitmuster im übrigen Signal nicht auftreten. Es handelt sich dafür allerdings um Bitmuster, die besonders störanfällig sein können. Je nach Umgebung der Synchr.-Wörter kann hier das Längenverhältnis aufeinanderfolgender Halbwellen 1:4 und 4:1 betragen. Bei ungenügender Signalentzerrung kann schon bei geringen Störungen durch Rauschen oder Zeitschwankungen eine Verfälschung des Bitmusters entstehen, so daß das Synchr.-Wort nicht erkennbar ist. Dieser Nachteil ist besonders schwerwiegend, wenn am Beginn einer Spur die Blocksynchronisierung noch nicht hergestellt ist. Nach Durchführung der Blocksynchronisierung kann diese auch bei gestörten Synchr.-Wörtern durch Zählen der Bittakte aufrechterhalten bleiben.

Bei der digitalen Videoaufzeichnung werden große Informationsmengen in Form von verhältnismäßig kurzen, den einzelnen Spuren zugeordneten Signalabschnitten übertragen. Hier kommt es besonders darauf an, daß bei der Wiedergabe zu Beginn jedes Signalabschnittes die Bittakt-,Wort- und Blocksynchronisierung mit hoher Sicherheit herstellbar ist, wobei das hierzu erforderliche Signal möglichst wenig Übertragungszeit einnehmen soll.

Der Erfindung liegt die Aufgabe zugrunde, bei der Wiedergabe jeweils zu Beginn eines Signalabschnittes die Sicherheit für die Wort- und Blocksynchronisierung zu erhöhen, ohne daß dafür zusätzliche Übertragungszeit benötigt wird.

Diese Aufgabe wird durch die im Anspruch 1 beschriebene Erfindung gelöst. Vorteilhafte Weiterbildungen der Erfindung sind in den Unteransprüchen beschrieben.

Die erfindungsgemäße Lösung beruht auf folgenden Erkenntnissen und Überlegungen: Das Signal für den PLL-Einlauf nimmt aus Sicherheitsgründen eine verhältnismäßig lange Dauer ein. Die Toleranz für den Eintauchzeitpunkt des Kopfes in das Band wird zweckmäßigerweise in diese Dauer einbezogen. Das PLL-Run-In-Signal besteht aus mit der Bitrate des Übertragungscodes aufeinanderfolgenden Pegelübergängen (fch/2). Die Synchronisierung der PLL wird kaum nachteilig beeinflußt, wenn von diesen Pegelübergängen einige weggelassen werden.

Durch Weglassen von Pegelübergängen sollen daher die für die Wort- und Blocksynchronisierung erforderlichen Informationen in das PLL-Run-In-Signal eingefügt werden, und zwar mit möglichst viel Wiederholungen, um eine hohe Störsicherheit zu erlangen. Es braucht nicht gewährleistet zu sein, daß die dabei verwendeten Bitmuster nicht im übrigen Übertragungscode vorkommen, da der Run-In-Bereich durch seine zeitliche Lage bzw. auch durch die Kopfradphase gekennzeichnet ist. Außerdem kann eine Kennzeichnung durch das periodische Auftreten bestimmter Bitmuster, die z.B für die Wortsynchronisierung ausgenutzt werden, vorgesehen sein.

Bei den bekannten Übertragungssytemen erfolgt die Wort- und Block-Synchronisierung dadurch, daß ein vereinbartes Bitmuster (Sync-Wort) zu einem bestimmten Zeitpunkt auftritt. Die Information über den Beginn eines Blockes ist also nicht im Bitmuster enthalten, sondern ist durch den Zeitpunkt des Auftretens des Bitmusters gegeben. Dieses hat den großen Nachteil, daß bei einer Störung des Sync.-Wortes. ein vollständiger Block nutzlos verstreichen muß, ehe ein erneuter Synchronisierversuch erfolgen kann. Durch die in das PLL-Run-In-Signal eigefügten Zusatzinformationen kann z.B. zunächst die Synchronisierung eines wesentlich kürzeren Worttaktes erfolgen. Danach ergibt die Auswertung der die Zusatzinformation bildenden Bitmuster eine Auskunft über die Lage des Blockbeginns relativ zu dem jeweils ausgewerteten Wort.

Auf diese Weise wird während einer Zeit, die z.B. kürzer als die Dauer eines Blockes sein kann, eine vielfache Wiederholung von Blocksynchronisiervorgängen ermöglicht. Durch Vergleich der in kurzen Abständen aufeinanderfolgenden Auswertungsergebnisse kann im Störungsfall die Entscheidung für das richtige Ergebnis sichergestellt werden.

Die bekannten Sync.-Wörter zu Beginn jedes Blockes können natürlich weiterhin übertragen werden. Es ist üblich, die zu Beginn einer Spur hergestellte Wort- und Bolcksynchronisierung im Verlauf der weiteren Spur durch Zählen der von der PLL gelieferten Bit-Takte aufrechtzuerhalten.

Je nach Wahrscheinlichkeit für eine Störung der Blocksynchronisierung im Verlauf einer Spur sowie je nach Wichtigkeit der Wiederherstellung der Blocksynchronisierung im Störungsfall, können die bekannten Sync.-Wörter auch mit größerem Abstand übertragen werden oder sogar vollständig entfallen.

Ein Ausführungsbeispiel der Erfindung wird im folgenden anhand der Zeichnung erläutert. Darin zeigen

Fig. 1        den Aufbau des erfindungsgemäßen Spureinlaufsignals,

Fig. 2        eine zur Auswertung der Wort- und Blocksynchroninformation dienende Schaltung,

Fig. 3        Kurven zur Erläuterung der Wirkungsweise der Schaltung nach Fig. 2 und

Fig. 4,5        erfindungsgemäße Einlaufsignale.

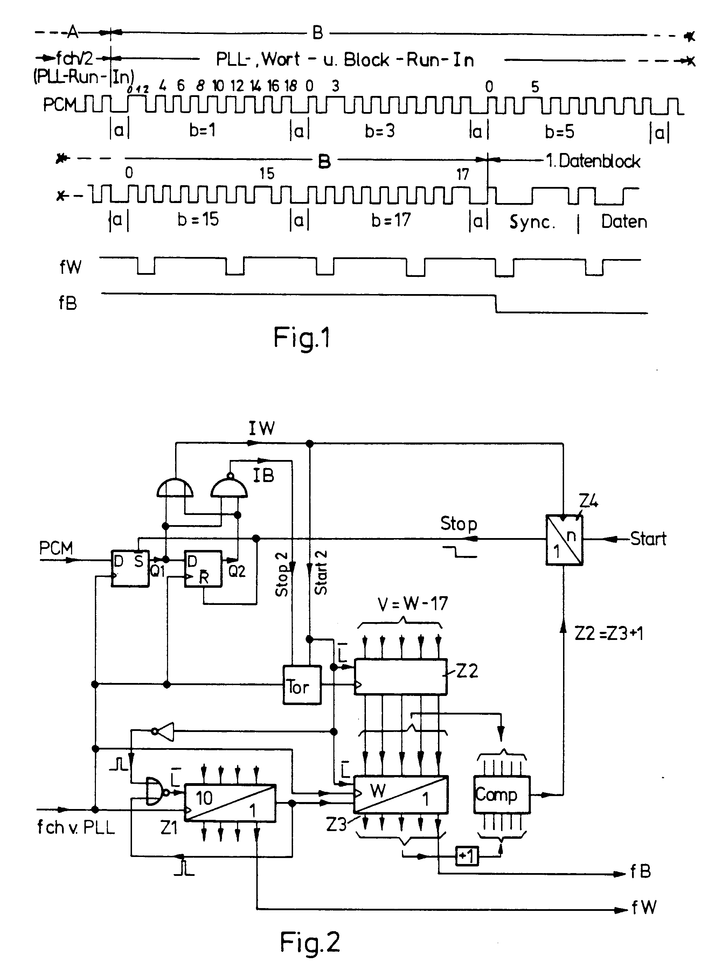

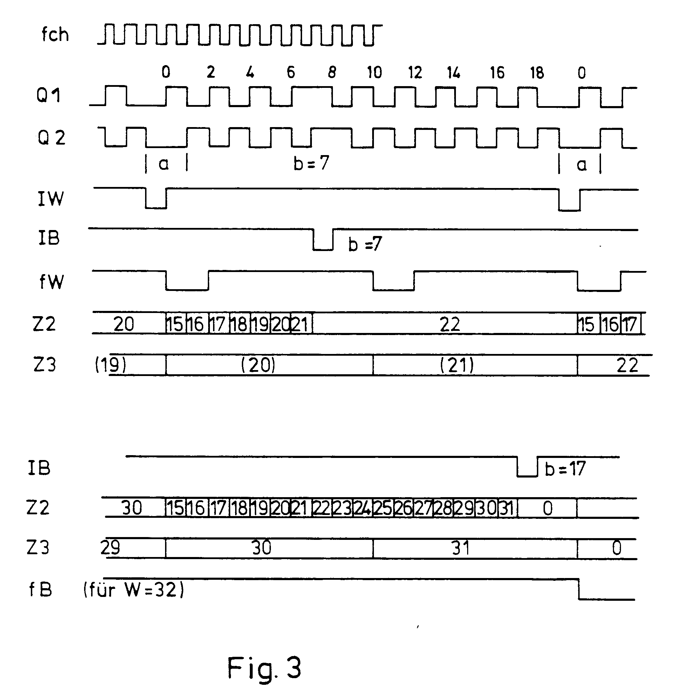

Fig. 1 zeigt ein erfindungsgemäßes Spureinlaufsignal. Es ist geeignet für Wortlängen von 2,4,5,10 und 20 bit sowie für beliebige Blocklängen. Das in Fig. 2 und 3 näher ausgeführte Beispiel bezieht sich auf eine Wortlänge von 10 bit und eine Blocklänge von 32 Wörtern = 320 bit. Das Signal gem. Fig. 1 enthält 10 negative Halbwellen mit der Dauer von 2 bit (a), die jeweils im Abstand von 20 bit auftreten sowie 9 18-bit-Worte. Die negativen Halbwellen (a) enthalten die Information für die Wortsynchronisierung. Die 18-bit-Worte enthalten die Information für die Blocksynchronisierung (b).

Die Worte für die Blocksynchronisierung enthalten eine hohe Redundanz (von $2^{18}$ möglichen Bitmustern werden nur 9 benutzt). Dafür ist das PLL-Run-In-Signal fch/2 nur geringfügig verändert, und die Auswertbarkeit der Blocksynchroninformation ist besonders einfach. Durch Ausnutzung zusätzlicher Bitmuster oder Verlängerung der Wortperioden im Spureinlaufsignal können natürlich auch mehr als 9 Wiederholungen der Blocksynchroninformaton erfolgen.

Das Einlaufsignal kann auch dadurch verlängert werden, daß vor dem in Fig. 1 dargestellten Signalabschnitt das PLL-Run-In-Signal fch/2 mit der gewünschten Dauer übertragen wird. Auch eine Verkürzung des Signals von vorn her ist möglich. Dabei sollte aber wenigstens der in der zweiten Zeile von Fig. 1 dargestellte unmittelbar vor dem ersten Datenblock befindliche Signalabschnitt erhalten bleiben.

Die zur Auswertung der Wort- und Blocksynchroninformation dienende Schaltung gem. Fig. 2 ist funktionfähig, sobald der PLL-Einlauf erfolgt ist. Der PLL-Einlauf kann vor Beginn des in Fig. 1 dargestellten Signalabschnittes vollzogen sein. Er kann sich aber auch bis in diesen Signalabschnitt hinein erstrecken. Bei den bekannten Systemen ist der PLL-Run-In-Bereich so reichlich bemessen, daß unter normalen Betriebsbedingungen zwischen dem Abschluß des PLL-Einlaufvorganges und dem Synchronsignal am Anfang des ersten Datenblocks eine verhältnismäßig große, als Zeitreserve vorgesehene Zeitspanne nutzlos verstreicht. Diese Zeit wird bei dem erfindungsgemäßen Einlaufsignal ausgenutzt, um mit hoher Sicherheit die Wort-und Blocksynchronisierung durchzuführen.

In der Schaltung nach Fig. 2 werden zunächst mit Hilfe zweier D-Flip-Flop und zweier Gatter die Signale IW und IB erzeugt (vergl. Fig. 3). Der IW-Impuls entsteht, sobald zwei Low-Bits aufeinanderfolgen. Der IB-Impuls entsteht, sobald zwei High-Bits aufeinanderfolgen. Das Signal IW stellt die Information für die Wortsynchronisierung dar. IB bildet die Information für die Blocksynchronisierung. Mit IW wird der Zähler Z1, der den von der PLL gelieferten Bittakt durch 10 teilt, phasensynchronisiert. Dieser Zähler erzeugt die Wortfrequenz fW mit definierter Phase relativ zu den Worten des PCM-Signals.

IW setzt außerdem den Zähler Z2 auf einen vorgegebenen Zahlenwert V = W-17. Der Wert "17" ist dabei eine durch das Signal in Fig. 1 vorgegebene Konstante. Die in Fig. 3 gezeigten Diagramme beziehen sich auf eine Wortzahl je Datenblock von W = 32.

Aus den Darstellungen in Fig. 3 geht hervor, daß der Zähler Z2 bei jedem IW -Impuls auf den Wert V = 15 voreingestellt wird. Gleichzeitig wird über ein Tor die Zuführung des Bittaktes fch zum Zähleingang des Zählers Z2 freigegeben. Durch das Signal IB wird die Zuführung des Bittaktes wieder unterbrochen. Die Ausgänge des Zählers Z2 stellen dann den Zahlenwert dar, auf den der Zähler Z3 einzustellen ist, damit dieser hinsichtlich der Blocksynchronisierung die richtige Zählphase einnimmt.

Die Einstellung des Zählers Z3 auf den Ausgangswert von Z2 erfolgt mit dem Impuls IW, wobei gleichzeitig der bereits beschriebene Auswertungszyklus erneut gestartet wird.

Unmittelbar vor der Einstellung des Zählers Z3 prüft ein Komparator, ob sich der Zähler Z3 bereits in der richtigen Zählphase befindet. Ein Zähler Z4 zählt die unmittelbar aufeinanderfolgenden richtigen Ergebnisse. Sobald eine vorgegebene Zahl n erreicht wird, gilt die korrekte Wort- und Phasensynchronisierung als gesichert. Der Einstellvorgang wird dann durch das vom Zähler Z4 abgegebene Stopsignal beendet.

Das Stopsignal sperrt die beiden D-Flip-Flop am Eingang der in Fig. 2 dargestellten Auswertungsschaltung. Das erneute Starten eines Auswertungsvorganges am Beginn des nächsten PCM-Signalabschnittes erfolgt durch Rücksetzen des Zählers Z4. Bei Ermittlung unterschiedlicher Zahlenwerte an den Eingängen und Ausgängen des Zählers Z3 wird Z4 jeweils zurückgesetzt.

Das erfindungsgemäße Prinzip für die Einlauf-Synchronisierung bei PCM-Signalen ist äußerst flexibel. Es ist leicht an beliebige Wort-und Blocklängen anpaßbar. Die Gesamtdauer des Einlaufsignals ist je nach verfügbarer Einlaufzeit und Anforderung an Störsicherheit in weiten Grenzen veränderbar.

In bereits bestehenden Übertragungssystemen kann das herkömmliche PLL-Run-In-Signal durch das erfindungsgemäße Signal ersetzt werden, ohne daß noch nicht umgerüstete Geräte in ihrer Funktionsfähigkeit beeinträchtigt werden.

Abschließend soll noch auf einige Möglichkeiten und Vorteile, die das erfindungsgemäße Verfahren bietet, hingewiesen werden. Die Aufgabenstellung bestand darin, die Sicherheit für die Wort- und Blocksynchronisierung zu erhöhen, ohne zusätzliche Übertragungszeit gegenüber bekannten Verfahren mit PLL-Einlaufsignal (PLL-Run-In) zu beanspruchen. Bei der Erfindung wird durch Veränderung des Abstandes einzelner Pegelübergänge die Information für die Blocksynchronisierung (diese schließt in der Regel die Wortsynchronisierung ein) mehrfach in das PLL-Einlaufsignal eingesteuert, ohne daß dabei die Taktsynchronisierung beeinträchtigt wird. Das bedeutet:

1. Die Run-length im Einlaufsignal muß so klein wie möglich bleiben.

2. Es darf im Einlaufsignal kein Gleichanteil entstehen. Bedingung 1 wird dadurch erfüllt, daß der Abstand der Pegelübergänge nicht mehr als auf das Doppelte erhöht wird. Bedingung 2 wird dadurch erfüllt, daß die Polarität der verbreiterten Halbwellen wechselt.

Die Information für die Blocksynchronisierung ist im Abstand zwischen den verbreiterten Halbwellen enthalten. Es ist zweckmäßig, diesen Abstand so zu wählen, daß der mit einer verbreiterten Halbwelle gestartete Taktzähler Z2 beim Auftreten der nächsten verbreiterten Halbwelle den Abstand der betreffenden Halbwelle von einen Referenzzeitpunkt für die Blocksynchronisierung angibt. Hierbei kann der Taktzähler bei jeder verbreiterten Halbwelle nach Auswertung des Zählergebnisses neu gestartet werden.

Die Wortsynchronisierung erfolgt dabei indirekt über die Blocksynchronisierung.

Bei den angegebenen Beispielen liegen die verbreiterten Halbwellen a der ersten Polarität in einem festen Zeitraster, das der Wortfrequenz entspricht, d.h. der Abstand zwischen diesen Halbwellen beträgt z.B. 2 oder 4 Worte. Diese Halbwellen sind zum Synchronisieren des Wortzählers Z1 geeignet. Außerdem starten diese Halbwellen den Taktzähler Z2 zur Ermittlung des Referenzzeitpunktes. Die verbreiterten Halbwellen b der zweiten Polarität liegen zeitlich so, daß der Zählerstand des Taktzählers Z2 bei ihrem Auftreten als Referenzangabe auswertbar ist. Diese Referenzangabe kann z.B. darin bestehen, daß der Zählerstand der Anzahl der Worte oder Wortpaare seit Blockbeginn entspricht. Zählt z.B. der Zähler Z3 für die Blocksynchronisierung Wortpaare, so müssen bei bereits vollzogener Synchronisierung die Zählerstände des Taktzählers und des Wortpaarzählers für die Blocksynchronisierung bei jeder Halbwelle b übereinstimmen. Während des Synchronisiervorganges wird der Wortzähler jedesmal auf den Stand des Taktzählers gesetzt. Wenn die Synchronisierung bereits erfolgte, ist dieser Vorgang zwar überflüssig, aber auch nicht schädlich. Nach einer vorgegebenen Anzahl von Übereinstimmungen kann die Synchronisation als gesichert angesehen werden, und der Synchronisiervorgang wird beendet.

In der Schaltung nach Fi.g 2 wird das Zählen der Übereinstimmungen mit dem Zähler Z4 durchgeführt. Sofern zu ermitteln ist, ob eine bestimmte Anzahl von Übereinstimmungen in ununterbrochener Folge aufgetreten ist, kann als Indikator auch ein Schieberegister mit einer entsprechenden Anzahl von Stufen benutzt werden. In den seriellen Eingang des Schieberegisters wird dann z.B. bei jeder Übereinstimmung eine "1", sonst eine "0", eingegeben. Der Synchronisationsvorgang kann abgebrochen werden, sobald alle Stufen des Schieberegisters den Inhalt "1" haben.

Die Dauer des Einlaufsignals kann kürzer als ein Datenblock des nachfolgenden Signals sein, sie kann aber auch ein Mehrfaches der Blocklänge betragen. Im lezteren Fall gibt es folgende Möglichkeiten für das erfindungsgemäße Einlaufsignal:

a) Das Einlaufsignal ist blockperiodisch. Es ermöglicht die Phaseneinstellung des Zählers für die Blocksynchronisierung. Der eindeutige Referenzzeitpunkt to für den Beginn des ersten Datenblocks wird aus der grundsätzlich unterscheidbaren Signalstruktur von Datensignal und Einlaufsignal gewonnen, oder das Einlaufsignal enthält eine zusätzliche Kennung für den absoluten Referenzzeitpunkt to. Die zusätzliche Information für die Bestimmung des absoluten Referenzzeitpunktes to kann auch aus der Kopfradphase abgeleitet werden.

b) Das Einlaufsignal ermöglicht von jedem Bezugspunkt aus das Zählen auf einen eindeutigen Referenzzeitpunkt to, der z.B. am Beginn des ersten Datenblocks liegt.

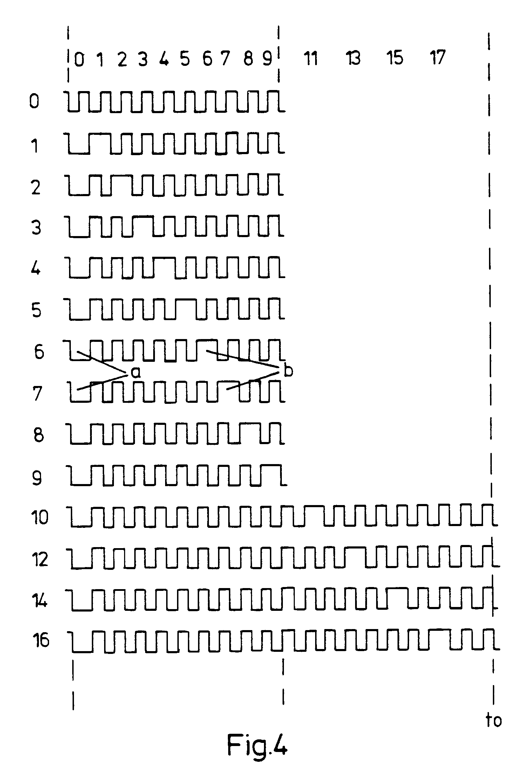

Ein Beispiel für ein blockperiodisches Einlaufsignal zeigt Fig. 4. Im Übertragungscode beträgt dabei die Blocklänge 360 Bit bzw. 180 Perioden fch/2 des bekannten PLL-Einlaufsignals. Durch Auslassen einzelner Pegelübergänge entstehen abwechselnd verbreiterte Halbwellen a und b. Der Abstand der Halbwellen a beträgt 10 bzw. 20 Perioden fch/2. Die Halbwellen b sind so angeordnet, daß ein Zähler, der die fch/2-Perioden von a an zählt, bei b den Zählerstand errreicht, der gleich der Anzahl der 10-Periodenabschnitte seit Blockbeginn ist. Der Block beginnt mit Abschnitt 0, der ein reines PLL-Einlaufsignal darstellt, und endet mit Abschnitt 17. Während der Dauer eines Blockes können 13 Blocksynchronisierungen erfolgen.

Der in Fig. 4 dargestellte Block kann im Einlaufsignal mehrfach wiederholt werden. Dabei braucht der erste Block nicht vollständig zu sein.

Der Abstand der a-Impulse beträgt in diesem Beispiel 20 bzw. 40 bit. Die Wortlänge im Datensignal beträgt 10 bit. Daher kann der Zähler für die 10-Perioden-Abschnitte leicht auch als Wortzähler für das Datensignal benutzt werden. Die Länge der Zählabschnitte im Einlaufsignal könnte aber auch von diesen Werten abweichen. Der 360 bit lange Einlaufsignal-Block kann z.B. durch die a-Impulse auch in 15 Abschnitte zu je 24 bit (12 fch/2-Perioden) unterteilt sein.

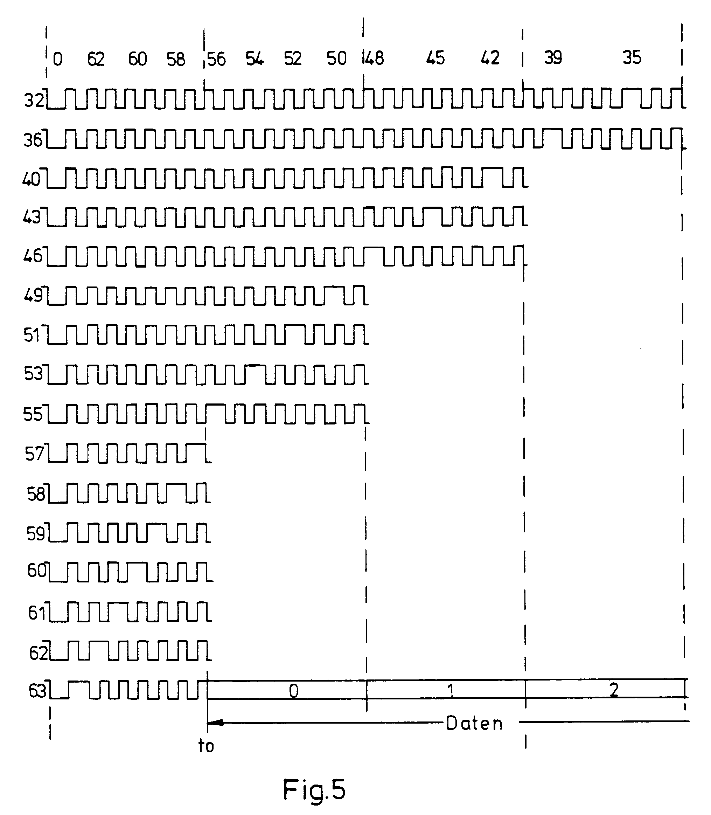

Fig. 5 zeigt ein erfindungsgemäßes Einlaufsignal, das sich über die Dauer mehrerer Datenblökke erstrecken kann, und das von jedem Impuls b aus das Zählen auf einen eindeutigen Referenzzeitpunktes to zu Beginn des ersten Datenwortes bzw. -blocks ermöglicht (Fall b). Fig. 5 zeigt in der oberen Zeile die Zählerstände des fch/2-Perioden-Zählers, der jeweils durch a auf "0" gesetzt wird und von da aus im Gegensatz zur Fig. 4 rückwärts zählt. Die Zahlen in der linken Spalte von Fig. 5 geben die Zählerabstände des Abschnittszählers für die Ermittlung der Referenzzeit an. Es handelt sich hier um 8-Perioden-Abschnitte. Nach Ablauf des 63. Abschnittes springt der Zähler auf "0" und markiert damit den Beginn des ersten Datenwortes. Das hier angegebene Einlaufsignal kann durch Fortsetzung des in Fig. 5 dargestellten Schemas nach oben beliebig verlängert werden. Die Ausnutzbarkeit des Signals hängt von der Stufenzahl der Zähler ab. Die Zahlenangaben in Fig. 5 entsprechen 6-stufigen Zählern.

Der Vorteil des in Fig. 5 dargestellten Signals besteht darin, daß das PLL-Einlaufsignal (fch/2) am Anfang durch die zusätzliche Information für die Einstellung eines Referenzzeitpunktes to nur geringfügig verändert wird. Die Dichte der a- und b-Impulse nimmt dann zu und ist kurz vor dem Referenzzeitpunkt (1. Datenwort) am höchsten. Dadurch wirken sich Toleranzen für den Beginn das Band-Kopf-Kontaktes und das Fangen der PLL auf den Synchronisiervorgang nur wenig aus.

Das Einlaufsignal ist aufgrund der DC-Freiheit (kein Gleichanteil) und geringer Run-lenght unempfindlich gegen Übertragungsverzerrungen. Die für die Auswertung zu erkennenden Bitmuster 1001 bzw. 0110 sind innerhalb des Signals fch/2 (010101...) durch Störsignale nicht leicht vortäuschbar. Daher kann bei genügender Länge des Einlaufsignals die für die Auswertung der Daten erforderliche Synchronisierung mit hoher Sicherheit erfolgen. Die Übertragung der herkömmlichen Synchronsignale am Beginn jedes Datenblocks kann entfallen, wenn die Möglichkeit besteht, den Synchronismus durch Zählen der Taktimpulse mit genügender Sicherheit aufrechtzuerhalten. Dies wird besonders dann der Fall sein, wenn die Signalabschnitte (Aufzeichnungsspuren) verhältnismäßig kurz sind oder die Gefahr für Bit-Slips der PLL gering ist.

**Patentansprüche**

1. Verfahren zur Übertragung eines Digitalsignals in unterteilten Signalabschnitten mit je einen Einlaufsignal, dessen Pegelübergänge im selben Zeitraster liegen wie die Pegelübergänge des nachfolgenden Datensignals, am Beginn des Signalabschnittes, dessen Phasenbeziehungen in Bezug auf den vorhergehenden Signalabschnitt unbestimmt bzw. unsicher sind, insbesondere bei Aufzeichnung und Wiedergabe eines PCM-Signals in unterteilten Spuren, **dadurch gekennzeichnet,** daß das Einlaufsignal (Bereiche A + B) außer der Information für den PLL-Einlauf mit mehrfacher Wiederholung die Information für die Blocksynchronisierung oder für den Abstand eines den Beginn der Datenübertragung markierenden Referenzzeitpunktes (to) enthält, wobei der zeitliche Abstand zwischen den Blocksynchroninformationen kürzer als die Dauer eines Blockes ist.

2. Verfahren nach Anspruch 1, dadurch gekennzeichnet, daß das Einlaufsignal aus im Abstand von n bit des Digitalsignals (n = 1, 2, 3...) aufeinanderfolgenden Pegelübergängen besteht (fch/2) und daß durch Änderung des Pegelübergangsabstandes für einzelne Halbwellen des Einlaufsignals Markierimpulse erzeugt werden, die die Information für die Blocksynchronisierung bilden.

3. Verfahren nach Anspruch 2, dadurch gekennzeichnet, daß die durch Änderung des Pegelübergangsabstandes erzeugten Markierimpulse (a, b) mit entgegengesetzter Polarität aufeinanderfolgen, und daß der Abstand zwischen diesen Impulsen ein Maß für den Abstand der betreffenden Impulse von einem Referenzzeitpunkt (to) für die Blocksynchronisierung (Fig. 4) bzw. für die Auswertung des auf das Einlaufsignal folgenden Datensignals (Fig. 5) ist.

4.   Verfahren nach Anspruch 3, dadurch gekennzeichnet, daß der Abstand zwischen den Markierimpulsen der einen Polarität (a) konstant ist bzw. daß diese Abstände in einem ganzzahligen Verhältnis zueinander stehen (Fig. 4, 5).

5.   Verfahren nach Anspruch 4, dadurch gekennzeichnet, daß der Abstand (a) gleich der Wortlänge des Datensignals ist oder in einem ganzzahligen Verhältnis zur Wortlänge des Datensignals steht (Fig. 5).

6.   Verfahren nach einem oder mehreren der vorhergehenden Ansprüche, dadurch gekennzeichnet, daß das Einlaufsignal periodisch ist und die Periodendauer gleich der Blocklänge des Datensignals ist oder in einem ganzzahligen Verhältnis zur Blocklänge des Datensignals steht (Fig. 4).

7.   Verfahren nach einem oder mehreren der vorhergehenden Ansprüche 1-6, dadurch gekennzeichnet, daß bei dem auf das Einlaufsignal folgenden Datensignal für Datenblöcke, deren Blockgrenzen in bezug auf die Referenzzeit festgelegt ist, keine Sync.-Wörter vorgesehen sind.

8.   Schaltung zur Auswertung eines Einlaufsignals in einem Verfahren nach einem oder mehreren der vorhergehenden Ansprüche, dadurch gekennzeichnet, daß ein erster Zähler (Z1) zur Erzeugung gleichlanger Abschnitte aus dem Bittakt vorhanden ist, daß ein zweiter Zähler (Z2) vorhanden ist, der zum Zeitpunkt der Markierimpulse der einen Polarität (a) gestartet wird, und dessen Zählergebnis zum Zeitpunkt der Markierimpulse der anderen Polarität (b) auf einen dritten Zähler (Z3) übertragen wird bzw. mit dem Zählerstand des dritten Zählers verglichen wird, wobei der dritte Zähler die durch den ersten Zähler erzeugten Abschnitte zählt, und daß ein bestimmter Zählerstand des dritten Zählers eine Referenzzeit für die Auswertung des auf das Einlaufsignal folgenden Datensignals liefert.

9.   Schaltung nach Anspruch 8, dadurch gekennzeichnet, daß die Fälle der Übereinstimmung der Zählerstände des zweiten und des dritten Zählers im Zeitpunkt der Markierimpulse (b) mit einem weiteren Zähler (Z4) bzw. einem Schieberegister gezählt werden, und daß bei Erreichen eines vorgegebenen Zahlenwertes die Einlaufsynchronisiervorgänge beendet werden.

10.   Schaltung zur Verarbeitung eines Digitalsignals mit einer Auswerteschaltung nach Anspruch 8 oder 9, **dadurch gekennzeichnet,** daß für die Ermittlung der Datenblockgrenzen des Digitalsignals, soweit es sich um Datenblöcke festgelegter Länge handelt, ein Zähler (Z3) vorgesehen ist, der nur die Taktperioden von dem Referenzzeitpunkt (to) aus zählt.

## Claims

1.   A method of transmitting a digital signal in subdivided signal portions each having a run-in signal, the level transitions of which are in the same time raster as the level transitions of the following data signal, at the beginning of the signal portion, its phase relationships being indeterminate or unsure in relation to the preceding signal portion, more particularly when recording and playing back a PCM signal in subdivided tracks, **characterised in that** the run-in signal (regions A + B) contains, as well as the information for the PLL run-in with multiple repetition repeated, the information for the block synchronising or for the interval of a reference point in time (to) which marks the beginning of the data transmission, in which the time interval between the block synchronising information is shorter than the duration of a block.

2.   A method according to claim 1, **characterised in that** the run-in signal consists of level transitions (fch/2) which are successive at an interval of n bits of the digital signal (n = 1, 2, 3...) and that by changing the level transition interval for individual half waves of the run-in signal marking pulses are produced which form the information for the block synchronisation.

3.   A method according to claim 2, **characterised in that** the successive marking pulses (a,b) which are produced by changing the level transition interval have opposite polarity and that the interval between these pulses is a measure of the interval of the relevant pulses from a reference point in time (to) for block synchronisation (Fig. 4) or for evaluating the data signal (Fig. 5) following after the run-in signal.

4.   A method according to claim 3, **characterised in that** the interval between the marking pulses of one polarity (a) is constant and/or that these intervals are in a whole-number ratio to each other (Figs. 4, 5).

5.   A method according to claim 4, **characterised in that** the interval (a) is equal to the word length of the data signal or is in a whole-number ratio to the word length of the data signal (Fig. 5).

6. A method according to one or more of the preceding claims, **characterised in that** the run-in signal is cyclical and the period is equal to the block length of the data signal or is in a whole-number ratio to the block length of the data signal (Fig. 4).

7. A method according to one or more of the preceding claims 1-6, **characterised in that** in the data signal for data blocks, following after the run-in signal, of which the block limits are fixed in relation to the reference time, no synchronisation words are provided.

8. A circuit for evaluating an inlet signal in a method according to one or more of the preceding claims, **characterised in that** a first counter (Z1) for producing equal length portions from the bit clock pulse is present, that a second counter (Z2) is present which is started at the point in time of the marking pulses of one polarity (a) and its count is transmitted at the point in time of the marking pulses of the other polarity (b) to a third counter (Z3) and/or is compared to the count of the third counter, in which the third counter counts the portions produced by the first counter and that a specific count of the third counter delivers a reference time for the evaluation of the data signal following after the run-in signal.

9. A circuit according to calim 8, **characterised in that** the instances of agreement between the count of the second and third counters at the point in time of the marking pulses (b) are counted with a further counter (Z4) or with a shift register, and that when a predetermined number value is reached the run-in synchronising processes are terminated.

10. A circuit for processing a digital signal with an evaluation circuit according to claim 8 or 9, **characterised in that** for determining the data block limits of the digital signal, as far as it relates to data blocks of fixed length, a counter (Z3) is provided which only counts the clock periods from the reference point in time (to).

**Revendications**

1. Procédé pour la transmission d'un signal numérique dans des portions de signal subdivisées avec un signal d'entrée chacune, dont les transitions de niveau se trouvent dans la même grille de temps que les transitions de niveau du signal de données suivant, au début de la portion de signal dont les rapports de phase par rapport à la portion de signal précédente sont incertains ou pas sûrs, en particulier lors de l'enregistrement et de la reproduction d'un signal MIC, **caractérisé en ce** que le signal d'entrée (zones A + B) contient, en plus de l'information pour l'entrée de PLL à répétition multiple, l'information pour la synchronisation de bloc ou pour l'écart d'un moment de référence (to) qui marque le début de la transmission de données, l'écart temporel entre les informations de synchronisation de bloc étant plus court que la durée d'un bloc.

2. Procédé selon la revendication 1, **caractérisé en ce** que le signal d'entrée est constitué par des transitions de niveau (fch/2) qui se succèdent à un écart de n bit du signal numérique (n = 1, 2, 3...) et que des impulsions de marquage, qui forment l'information pour la synchronisation de bloc, sont produites par variation de l'écart des transitions de niveau pour différentes demi-ondes.

3. Procédé selon la revendication 2, **caractérisé en ce** que les impulsions de marquage (a, b) produites par variation de l'écart des transitions de niveau se succèdent en étant de polarité inverse et que l'écart entre ces impulsions est une mesure pour l'écart des impulsions concernées par rapport à un moment de référence (to) pour la synchronisation de bloc (fig. 4) ou pour l'exploitation du signal de données qui suit le signal d'entrée (fig. 5).

4. Procédé selon la revendication 3, **caractérisé en ce** que l'écart entre les impulsions de marquage de l'une des polarités (a) est constant ou qu'il y un rapport entier entre ces écarts (fig. 4, 5).

5. Procédé selon la revendication 4, **caractérisé en ce** que l'écart (a) est égal à la longueur de mot du signal de données ou qu'il y a un rapport entier avec la longueur de mot du signal de données (fig. 5).

6. Procédé selon l'une ou plusieurs des revendications précédentes, **caractérisé en ce** que le signal d'entrée est périodique et que la durée de la période est égale à la longueur de bloc du signal de données ou qu'il y a un rapport entier avec la longueur du bloc du signal de données (fig. 4).

**7.** Procédé selon l'une ou plusieurs des revendications précédentes 1 à 6, **caractérisé en ce** qu'il n'y a pas de mots de synchronisation prévus pour le signal de données pour blocs de données qui suit le signal d'entrée, blocs de données dont les limites sont fixées par rapport au temps de référence.

**8.** Circuit pour l'exploitation d'un signal d'entrée dans un procédé selon l'une ou plusieurs des revendications précédentes, **caractérisé en ce** qu'il existe un premier compteur (Z1) pour produire des portions de même longueur à partir du rythme binaire, qu'il existe un second compteur (Z2) qui est mis en marche au moment des impulsions de marquage de l'une des polarités (a) et dont le résultat de comptage au moment des impulsions de marquage de l'autre polarité (b) est transmis au troisième compteur (Z3) ou est comparé à la position du troisième compteur, le troisième compteur comptant les portions produites par le premier compteur, et qu'une certaine position du troisième compteur donne un temps de référence pour l'exploitation du signal de données qui suit le signal d'entrée.

**9.** Circuit selon la revendication 8, **caractérisé en ce** que les cas de concordance des positions du second et du troisième compteur au moment des impulsions de marquage (b) sont comptés avec un autre compteur (Z4) ou un registre à décalage et que les opérations de synchronisation d'entrée sont terminées lorsqu'une valeur numérique prédéterminée est atteinte.

**10.** Circuit pour le traitement d'un signal numérique avec un circuit d'exploitation selon la revendication 8 ou 9, **caractérisé en ce** qu'il est prévu un compteur (Z3) qui compte les périodes de cycle seulement à partir du moment de référence (to) pour la détection des limites du bloc de données du signal numérique, dans la mesure où il s'agit de blocs de données de longueur fixée.

Fig.1

Fig.2

Fig. 3

EP 0 216 329 B1

Fig.4

EP 0 216 329 B1

Fig.5

12